# EUROPEAN PATENT APPLICATION

(11) **EP 2 760 002 A2**
(43) Date of publication of application: **30.07.2014**
(21) Application number: 14153143.4
(22) Date of filing: 29.01.2014
(51) Int. Cl.: G09B 5/06

(54) **Methods and systems for converting text to video**

(30) Priority: 29.01.2013 AU 2013900273
(71) Applicant: Social IT Pty Ltd, Sydney, NSW 2000 (AU)
(72) Inventor: Phelan, Kathleen Jane, Sydney, New South Wales 2000 (AU); Sands, Gillian Emma, Sydney, New South Wales 2000 (AU)
(74) Representative: Curley, Donnacha John

(57) **Abstract**

The present application is directed at the conversion of text to visual speech, and in particular its application to the provision of educational, instructional or technical information. The technique uses a library of pre-recorded video. The pre-recorded video contains spoken words and phrases. A desired piece of text is provided as an input and a video is assembled from the pre-recorded video by identifying appropriate video segments from the input text.

## Description

### FIELD OF THE INVENTION

The present invention relates generally to the conversion of text to visual speech, and in particular its application to the provision of educational, instructional or technical information.

### BACKGROUND OF THE INVENTION

Educational, instructional or technical courses are intended to impart information to a user, who may, for example but not necessarily, be a student. Educational, instructional or technical material is often provided to the user in the form of text - for example, text books, handouts, manuals, papers, user guides, and slides all allow a user to be provided with educational material as text. The student learns by reading the educational, instructional or technical material.

However, it is often more convenient to convey information through speech, rather than text. Indeed, people often learn better if information is provided through speech, as well as or instead of text - speech provides a more intimate connection between the provider of information and the receiver of the information, can often provide information more quickly, and increases the engagement of the listener.

One development, arising to meet this need, has been the use of text to speech systems. In text to speech systems, a user enters information in text format, and specialised computer software converts the text to synthesised speech.

The benefits of speech over text can be enhanced by providing video of a person speaking the relevant information - i.e. by a video narrator. A video narrator provides all the benefits of an audio narrator, but can be even more engaging - they allow the provision of information to be more personable. The visual channel in speech communication is of great importance, so a view of the speaker's face (for example) can improve comprehension and intelligibility of speech. It can also enable the expression of emotions, which can add emphasis in appropriate places which can be picked up by a listener more clearly than if the information was conveyed in a purely textual or audio format.

To this end, text to audiovisual speech systems have been developed, which can take a text string and produce an audiovisual output of a person speaking the words. This is generally done using various animation techniques - for example, by overlaying animation features on an image of a person's face (to simulate mouth movement), or by constructing videos made up of sequential visemes, which correspond to the phonemes making up the relevant speech patterns. An example of such an approach is found in US patent number 5,657,426 (Waters), which identifies phonemes and aligns them with corresponding visemes to produce audio-visual synthetic speech. Similarly, US patent number 6539354 (Sutton) produces lip-syncing animation for synthetic visual speech by identifying visemes that correspond to phonemes received in input speech information.

However, to date, both of the above solutions have proven unsatisfactory, because neither of them produces natural-looking video. This greatly decreases the advantages associated with providing information through video. This problem is recognised in Waters, for example, which attempts to address the problem by interpolating between visemes, using non-linear motion functions.Sutton attempts to do this by weighting the visemes. However, these approaches are complex, and are still not likely to produce sufficiently natural looking speech.

It would be desirable to provide an improved system for converting text to audiovisual speech, which addresses the problems of the art and provides a more natural visual appearance of the spoken words.

### SUMMARY OF THE INVENTION

Accordingly, in a first aspect of the present invention, there is provided a computer-implemented method of converting text to video, comprising:
receiving text input via an input device;
analyzing the text input to identify one or more component phrases;
searching a library, the library containing recorded videosegments of narrators speaking known phrases, for one or more corresponding video segments of narrators speaking the one or more component phrases; and
providing, via one or more audio and visual display devices, video of a narration of the text input, based on the one or more corresponding video segments.

The use of recorded video segments of narrators speakingknown phrases means that voice inflections in the resultant video are natural- therecorded video segments are audiovisual recordings which capture a real person speaking (i.e. vocally articulating) the component phrase(s). This is in contrast to other systems which use automated generation of audio-visual speech, which therefore do not result in a sufficiently natural video narration.

The component phrases will each comprise at least one word, and typically will comprise multiple words. For longer passages of text there will typically be multiple component phrases. However, the length of the component phrases identified by the system may vary widely in different embodiments of the present invention. Generally, however, the longer the component phrases, the more natural the resultant video narration will be, so it is desirable for each component phrase to comprise multiple words.

In cases where there are multiple component phrases in the textual input, and video segments can be identified for each of the component phrases, these video segments may be concatenated in order to produce a final video of a narrator speaking the textual input. Preferably, of course, these corresponding video segments are all of recorded speech from the same narrator.

If no precise video matches are found, the closest matches may be provided to a user for them to select an appropriate narration. This may include providing multiple video segments of substitute component phrases, which the user may choose to concatenate in order to produce a desired video narration.Closest matches are identified through use of a decision making taxonomy which evaluates the textual input, searches the video library for substitutecomponent phrases, ranks the substitutecomponent phrases based oninterchangeabilitywith the original textual input, and provide the substitutecomponent phrases for the user to select an appropriate narration. The user may select the desired substitute component phrase to produce a desired video narration with a mouse, keyboard, or by utilizing the optics features on a wearable device. Further details on this issue are provided in the detailed description below.

One difficulty in providing the solution of the present invention is to provide an appropriate library of video segments. If the library does not contain video segments for sufficient spoken phrases, then this clearly limits the applicability of the system. However, in any given context, the number of phrases that may be used is limited. For example, in the context of providing online education or instruction about interactive web forms, the number of relevant phrases can be limited to a practical number. Further details on this issue are provided in the detailed description below.

In a further aspect of the present invention, there is provided a computing device for converting text to video, comprising:
at least one processor configured to implement the method of the first aspect of the present invention; and
a memory in communication with the at least one processor.

The computing device may be a mobile computing device, and in particular it may be a mobile phone.The text input may be received using any suitable input means/ input device (e.g. a keyboard or sensory screen), and the video may be output using any suitable display means/display device (e.g. an LCD screen).

The library containing the recorded video segments may be stored on multiple computers, in many locations and in a distributed manner, i.e. in the "cloud". The present inventionmay access the recorded video segments through a global computer network such as the Internet.

In another embodiment, text input may be translated into different languages wherein the output is recorded video segments of narrators speaking the text input in the language desired by the user.The text may be input by any suitable input device such as a keyboard, sensory screen or mouse, or through a microphone if the computing device is configured to with the software to convert speech to text. The microphone may be located on a wearable device and the output of video narration in the desired language may be the optics of the wearable device, a mobile device or computer. The output of the recorded video segments of narrators speaking the text input speaking the text input in the language desired by the user may be displayed on an LCD screen of a computer, mobile device, or the optics of a wearable device.

In further aspects of the present invention, there are also provided (non-transitory) computer readable media and computer program elements for directing a programmable device to perform the steps of the above method. Yet further aspects of the present invention will be revealed throughout this specification.

A detailed description of one or more embodiments of the invention is provided below along with accompanying figures that illustrate by way of example the principles of the invention. While the invention is described in connection with such embodiments, it should be understood that the invention is not limited to any embodiment. On the contrary, the scope of the invention is limited only by the appended claims and the invention encompasses numerous alternatives, modifications and equivalents. For the purpose of example, numerous specific details are set forth in the following description in order to provide a thorough understanding of the present invention.

The present invention may be practiced according to the claims without some or all of these specific details. For the purpose of clarity, technical material that is known in the technical fields related to the invention has not been described in detail so that the present invention is not unnecessarily obscured.

### BRIEF DESCRIPTION OF THE DRAWINGS

An illustrative embodiment of the present invention will be discussed with reference to the accompanying drawings wherein:
FIGURE 1 is a general diagram of a computer architecture which could be used to implement the method and system of the present invention;
FIGURE 2 is a wireframe for a screenshot from a software application depicting educational, instructional or technical material with a video narrator; and
FIGURE 3 is a simplified flowchart depicting a method according to an embodiment of the present invention;

### DETAILED DESCRIPTION

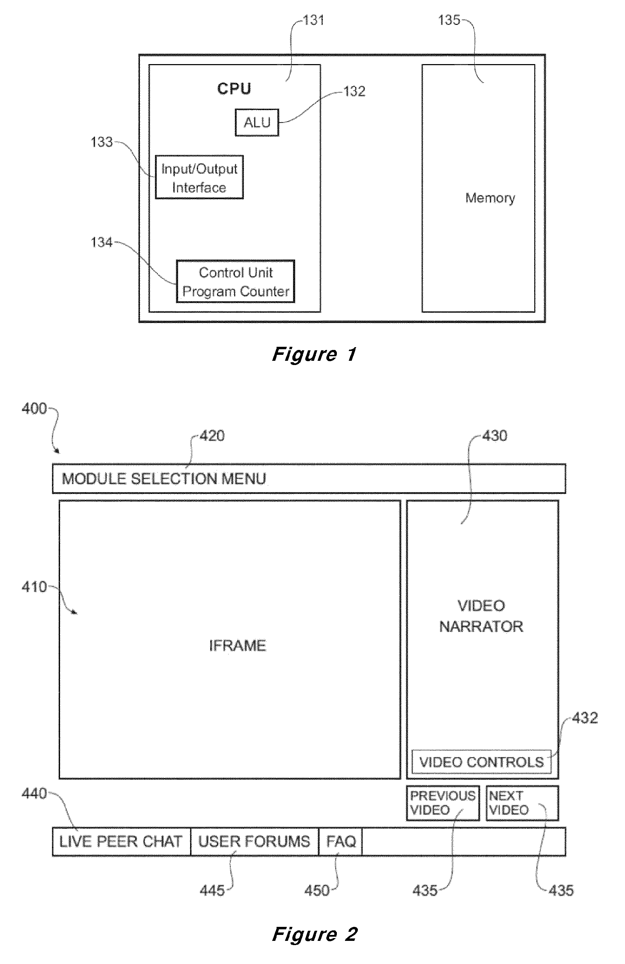

The present invention may be implemented on a web server, which will typically operate broadly under the architecture shown in Figure 1, wherein a central processing unit (CPU) 42, containing an Input/Output Interface 44, an Arithmetic and Logic Unit (ALU) 43 and a Control Unit and Program Counter element 45 is in communication with input and output devices through the Input/Output Interface 44, and a memory 46.

The present invention is directed, in this embodiment, specifically at the provision of educational, instructional or technical modules. In some cases, these may educate or instruct a user (for example a student) regarding how to interact with interactive web content. In other cases, and in particular modules for teaching a student how to interact with interactive web content. A user (for example an instructor or teacher), who wishes to create an educational, instructional or technical module, may log in and create a module - this could be a formal course which allows a student to obtain certification in a particular area, a course to teach the student to interact with specific web functionality, or a more informal course. Aspects of such a course may be dependent on the user's responses and accordingly the course may be adaptive based on the user's reactions and inputs. Indeed the instructions for the student may in whole or in part be generated on the fly. It will be appreciated that in this context recording all of the possible video content would be impracticable and that artificially producing audio-visual content would be useful. However, as explained in the background existing techniques result in an unappealing result for users.

Figure 2 depicts a wireframe for a screenshot 400 from a software application running an exemplary educational, instructional or technical module that may be produced according to an embodiment of the present invention, which could be displayed to a user using a conventional display device, such as an LCD display, or on a wearable optical display device. As shown in Figure 2, the application uses a frame (or iframe or web browser) 410 to display the relevant educational, instructional or technicalcontent to a user. At the top of the page is a module selection menu button 420, which enables the user to select a particular educational, instructional or technical module to be attempted. The selection of the module is likely to affect the particular page shown in the frame 410. Next to the frame 410, there is shown a video narrator 430, for providing educational, instructional or technical information to the user about the page shown in the frame 410. Video controls 432 (e.g. play, stop, pause, etc.) are provided at the bottom of the video narrator panel 430. Furthermore, video selection buttons 435 (Next Video, Previous Video) are also displayed. At the bottom of the page, a live peer chat button 440 is shown, enabling a user to immediately chat with other users attempting the same course. A user forums button 445 allows a user to access discussion forums associated with the course, and a FAQ button 450 links to frequently asked questions about the course. Additional buttons or links may be provided, for example to allow a user to access a help function about the use of the software program provided in this embodiment of the present invention.

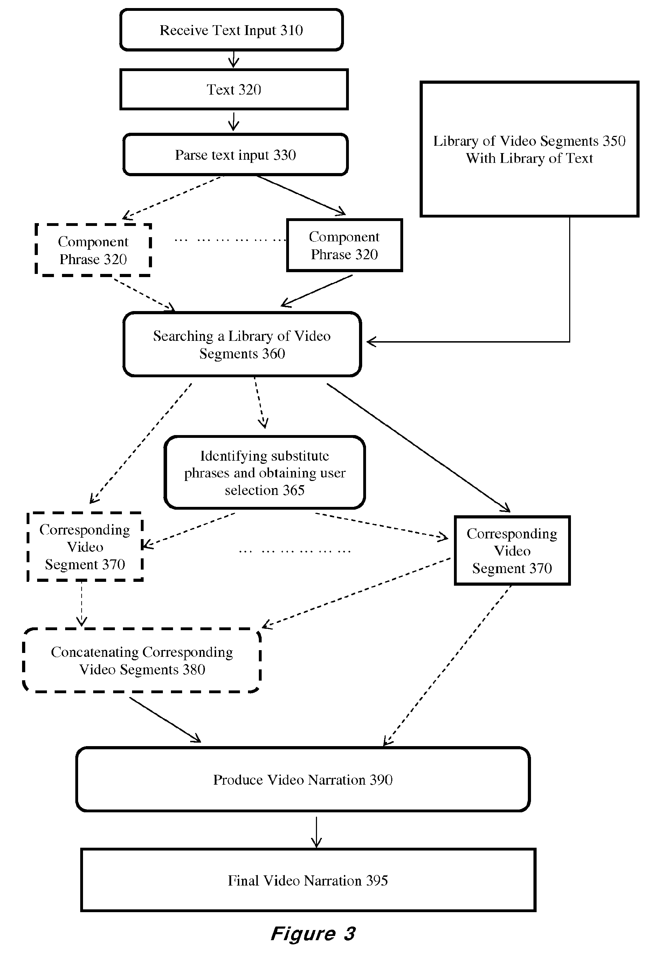

Regardless of the actual course content, in accordance with the present invention, the user can include video narration in the educational, instructional or technical module which will help the student to understand the relevant material. The present invention is directed at enabling appropriate video content to be included in the module. The process of enabling this content to be created is depicted in Figure 3 and described below.

### Receiving Text Input 310

For a particular step or educational, instructional or technical point shown in the frame 410, the user may be prompted to input text for a desired video narration or it may be provided to the next step in the process as a predetermined file or files. The user can then simply enter the text 320 into an appropriate field presented by the software application or the field is populated according to one or more default rules (those rules not being central to the implementation of the invention).

The text may be input by any suitable input device, such as a keyboard or mouse, or through a microphone if the computing device is configured with software to convert speech to text. The microphone may be located on a wearable device.

### Analyzing Text Input 330 and Searching a Library 360

The steps of analyzing the text input and searching the library may be performed in a variety of different ways, according to known searching methodologies. Databases are commonly searched for exact and part matches, and text documents are routinely searched for particular phrases. Search engines employ text parsing techniques to look for key phrases (or similar matches) in longer text passages. Similar methodologies may be applied in the present invention. One simple iterative approach is described below.

In this approach, a library 350 is first searched 360 for an exact match of the text input. The library 350 contains recorded video segments of narrators speaking known phrases. Each video segment is associated with corresponding text of the phrase narrated in that video segment. The video segments can then be arranged such that they are readily searchable for a text string - e.g. the video segments may be arranged in alphabetical order of the associated phrases. By associated is meant that the video has corresponding text which identifies the words spoken in the video. The text may for example be stored in a separate database or as metadata with the video file. The text for a video may be segmented, with each segment of the video having an associated text identifying the word or phrase spoken in the segment. Where a piece of video contains segments, each segment in the video may be identified by an appropriate time values which identify the start and finish points of the segment in the video. These time values may be stored with the text or linked to the video segment or the associated text. It will be appreciated that a variety of different techniques may be employed to do this including the use of a relational database to store the video, text and timings. This associated may be stored with the video or in a separate but related database. The text file may be manually created using a viewer listening to the voice and where appropriate adding time stamps to identify different segments of speech in the video. Equally, the user may be recording the video using a pre-prepared script for example from a teleprompter, and as a result of which the spoken words and phrases in each segment may be readily associated. At the same time, if recorded as a single piece of video with multiple segments, the timing values for words and phrases may also be obtained by reference to when they were displayed to the user. Another approach would be to use voice to text translation software to convert recorded speech to text, including as appropriate timings. It will be appreciated that the library may be initially created with a limited amount of video and added to subsequently.

Returning to the searching of the library, in one simple analyzing and searching approach, the library 350 is first searched alphabetically to find a video segment 370 in the library 350 that is associated with a phrase that matches the most letters from the beginning of the text input. If an exact match is found, that corresponds to the entire text input 310, then the corresponding video segment in the library 350 can provide an immediate and simple text-to-video conversion by presenting the segment of video as the converted text.

If no exact match for the whole text input is found, then the closest match is analysed to see whether it is a component phrase of the text input 310.

For example, if the text input 310 is:
"In the iframe to the left, you will see some important information",
   a video segment may be identified for a narrator saying the component phrase "in the iframe to the left". Once this is identified, the library can be searched for the remaining phrase "you will see some important information."

This process is repeated until video segments 370 for all component phrases 340 of the entire text input 310 are found.

Of course, the library 350 may contain recorded video narrations for phrases of varying lengths. For instance, the library 350 may contain both shorter recordings (e.g. "In the iframe", "to the left", "you will see", "some important information"), and also longer phrases (e.g. a full recording of "In the iframe to the left, you will see some important information"). Where multiple options are available, the longer matching phrase will generally be chosen - i.e. the full text input 320 will be converted using the fewest possible number of component phrases, and the fewest possible number of corresponding video recordings from the library 350. It will be appreciated that this will result in the most natural result.

Other more sophisticated searching routines include text pattern matching using "term trees" which allow a block of text consisting of words to be matched quickly against a collection of terms (in embodiments where patterns are lists of terms). A search may be conducted by traversing the term tree (starting from the root) with each position in a block of text, i.e. that being the text presented to the user for conversion to the visual spoken word.The terms being searched for are text versions of the spoken content in predetermined segments of video. The "term trees" and the terms representative of the available visual spoken word can be stored in one or more databases that are accessible for serving data as well as receiving further data using data server architectures to suit time and accessibility requirements. Another aspect is that phrases may vary depending on their context thus a phrase or its presentation may change based on the intent of the user, i.e. whether they are intending to give an instruction, re-assure the user or seek information from the user. For example, the phrase *move to the left* might be spoken differently depending on whether was instructing the user to *move to the left* or asking the user *do you want to move to the left?* Accordingly, the text data described above may have associated meta data identifying the context in which the phrase is used, e.g. instructional, re-assuring or inquiring. In conducting a search for a match, results matching the context of the input text may be selected preferentially over those with a different context.

Pooled server architecture may be used to deliver the matching functionality described above and has a number of advantages over single-server architecture. First, the number of servers in a pool or additional pools can be scaled so as to handle large quantities of traffic. Second, interface servers (in conjunction with the database servers) can handle most simple requests in a conventional manner without requiring a matching server. For example, if the text to video string is a commonly accessed text, the interface server that handles the request can readily identify the request as being a common one and the database server candeliver the matching audio-visual representation immediately rather than loading the string matching engine. The matching servers will notice the change and update themselves automatically. Third, the matching servers can focus exclusively on representing the matches efficiently and applying them to blocks of text as quickly as possible. Fourth, because all the data resides in the database, the interface servers and matching servers do not need to manage any permanent storage. If an interface server or matching server crashes, it is a simple matter to create a new one.

If the video library does not contain any combination of narrators speaking component phrases that exactly make up the text input, then the system may use a decision making taxonomy to identify one or moresubstitute phrases, to replace component phrases of the text input. The decision making taxonomy evaluates the textual input 320, searches the video library 350 for substitute component phrases, ranks the substitute component phrases based on interchangeability with the original textual input, and provides substitute component phrases 370 for the user to select an appropriate narration.When the substitute phrase(s) are identified, they can be presented to the user 365, who is then asked whether they wish to include them in the video narration. The user may select the desired substitute component phrase using a keyboard, mouse or input/output screen on a mobile device, or by utilizing the optical features of a wearable device. As an example, the phrase *slide to the left* may be interchanged with *move to the left* to infer the same generally meaning. It will be appreciated that a wide variety of techniques may be employed to implement such a decision making taxonomy. For example, a thesaurus database may be employed to identify alternatives to required words if a match is not found.

For example, in the example given above, where the text input 310 is:
"In the iframe to the left, you will see some important information",
   the library may include recordings of "In the iframe", "to the left" and "you will see." However, the library may not include a recording for the phrase "some important information." Instead, a substitute recording for, e.g., "essential information" may be identified using an appropriate decision making taxonomy, and presented to the user for their approval. If they agree (this may be done using any suitable input device, e.g. keyboard, mouse, or through a wearable device in a hands-free manner) then the resultant video narration will be "In the iframe to the left, you will see essential information."

### The Video Library 350

The video library may contain videos in any suitable format. Examples of current formats include Quicktime, Flash, AVI, MP4, and Windows Media Video formats, but it will be understood that other file formats may also be suitable.

The video library 350 may, in some embodiments, only contain video narrations of phrases relating to a particular context - e.g. an educational, instructional or particular technical context. This helps to create a working library 350 in a shorter timeframe, because the context may significantly limit the number of phrases that a user may enter for conversion. Of course, as the library 350 is built up, it may become suitable for use in a wider variety of contexts, without altering the essence of the present invention.

Each video in the library 350 comprises audio and visual content. The audio content will be associated with a particular text phrase that is narrated by a narrator in the video - e.g. "In the iframe to the left", as discussed above.The visual content is preferably of a particular narrator, and may be of their full body, or just a part of their body - for example, their head and shoulders. Preferably, it is at least of the narrator's face, as this gives significant aid in a listener's comprehension.

Videos of just the head and shoulders may be simpler to concatenate, as less variation is likely to be present between videos in the library 350. Videos are preferably substantially standardised, where possible, so that the start and finish position of the narrator in each video is substantially the same. This will also assist in providing a more natural view of the presenter in the video output 395, where concatenation is required.

The library 350 may contain videos of different narrators. Preferably, text input 320 is only converted using video of a single narrator - which may be specified by the user. However, if no exact match is found for a particular phrase, for a particular narrator, the user may be presented with an exact match from a different narrator if available. In some embodiments, it may be appropriate to provide video output from different narrators, for a single text input 320. However, it is expected that, if this option is used, different narrators would rarely if ever be used within a single sentence.

### Providing Video Narration 390

Where only one component phrase 370 is identified, this can simply be provided on its own as a video conversion of the text input 320. Alternatively, for text input 320 broken into multiple component phrases 370, these will generally be concatenated 380 before being provided to the user as the final video narration 395.

Considerable server power may be required to determine the order of the matched or closely matched segments of audio-visual representation of the source text, especially if more than one visual presenter is needed to best match the source text. The concatenation process can be largely determined by rules which need to be applied without the involvement of the user but may be set up with user preferences. Those preferences may cover aspects such as the strict use of only one presenter even though there may be gaps, the use of one or a group of types of presenters, the language or languages of the presenter, the ethnicity of the presenter, and many other characteristics.

The video narration 395 can then be associated, by the user, with particular material in their course, so that it is displayed to a student in the video narrator window 430 when the relevant material is displayed in the frame 410.

In another embodiment, text input may be translated into different languages wherein the output is recorded video segments of narrators speaking the text input in the language desired by the user. The text may be input by any suitable input device such as a keyboard or mouse, or through a microphone if the computing device is configured with software to convert speech to text. The microphone may be located on a wearable device and the output of video narration in the desired language may be the optics of the wearable device, a mobile device or computer. The output of the video narration of the text, spoken in the language desired by the user, may be displayed on an LCD screen of a computer, mobile device, or the optics of a wearable device. However, the output may differ from the software application wireframe screenshot in Figure 2, as the output may not utilize the wireframe screen shot in Figure 2 in its entirety. Rather, the output may only consist of a narrator's full body, or just a part of their body - for example, their head and shoulders. Preferably, it is at least of the narrator's face as this gives a significant aid to a listener's comprehension.

In this embodiment, the user may be provided with the ability to repeat the output of recorded video segments of narrators speaking the text input in the language desired by the user. This could, for example, be used to assist the user in the user's practice of speaking the language, which may be done along with the narrator speaking the language on the computer, mobile device, or the optics of the wearable device.

In cases where there are multiple component phrases in the textual input, and video segments can be identified for each of the component phrases in the language desired by the user, these video segments may be concatenated in order to produce a final video of a narrator speaking the textual input in the language desired by the user. Preferably, of course, these corresponding video segments are all of recorded speech from the same narrator in the language desired by the user. Indeed, it will be appreciated that the instructional text may be prepared in one language and automatically translated using automated translation software into another language which may be used as input text for the video production.

It will be appreciated that a number of different techniques may be employed to aggregate different video segments together into an aggregated piece of video content which may be played to the user on their device. In one advantageous approach employed, the videos are played as required from the library and segments extracted as required from the video based on the previously discussed timing values. The video segments (for the avoidance of doubt both audio and video) are then stitched together using any suitable automatic video editing technique to provide a stitched piece of video. For example, the frames at the end of a first segment may be blended with frames at the start of the second segment, for example by crossphasing them together possibly with warping. The result of which is that there is no apparent jump to a user viewing the resultant stitched video.

The stitched piece of video may then be re-sampled (audio and video) and reencoded. This inherently smooths the video. The smoothing is further enhanced by ensuring that the codec used for re-encoding is different from the source codec used for the original video.

Although embodiments of the present invention have been described in the foregoing detailed description, it will be understood that the invention is not limited to the embodiment disclosed, but is capable of numerous rearrangements, modifications and substitutions without departing from the scope of the invention. Modifications and variations such as would be apparent to a skilled addressee are deemed within the scope of the present invention.

For example, although the system has been described with reference to the production of educational, instructional or technical courses, the text-to-video feature may be utilised in many different contexts. However, limiting a particular embodiment of the present invention to a particular context will assist in limiting the size and searchability of the library of video segments.

The present invention can also be implemented in numerous ways, including as processes, apparatus, systems, or a computer readable media such as computer readable storage media or computer networks wherein program instructions are sent over optical or electronic communication links.

Throughout this specification and the claims that follow unless the context requires otherwise, the words 'comprise' and 'include' and variations such as 'comprising' and 'including' will be understood to imply the inclusion of a stated integer or group of integers but not the exclusion of any other integer or group of integers.

The reference to any prior art in this specification is not, and should not be taken as, an acknowledgment or any form of suggestion that such prior art forms part of the common general knowledge.

## Claims

1. A computer-implemented method of converting text to video, comprising:
receiving a text input;
analyzing the text input to identify one or more component phrases;
searching a library, the library containing recorded video segments of narrators speaking known phrases, for one or more corresponding video segments of narrators speaking the one or more component phrases; and
providing, via one or more audio and visual display devices, video of a narration of the text input, based on the one or more corresponding video segments.

2. A method according to claim 1, wherein the step of searching the library comprises the step of searching text associated with each video segment.

3. The method of claim 1 or claim 2, wherein each component phrase comprises multiple words.

4. The method of claim 1 or 2, wherein the text is analyzed into multiple component phrases.

5. The method of claim 4, wherein multiple video segments are provided, and further comprising:
concatenating the video segments in an appropriate order to produce the video of a narration of the text input.

6. The method of any preceding claim, wherein if no exact match can be found for one of the one or more component phrases, the method further comprises:
identifying a video segment for a similar phraseto the component phrase for which no exact match can be found; and
presenting the similar phrase to a user, wherein the user can choose to accept the similar phrase as a substitute for the component phrase of the text input.

7. The method of any preceding claim, wherein the library contains video segments of narrations for a particular context.

8. The method of claim 7, wherein the context is an educational or instructional context.

9. The method of claims 1 to 5, wherein if no exact match can be found for one of the one or more component phrases, the method further comprises:
identifying a plurality of video segments, each for similar phrases to the component phrase for which no exact match can be found; and
presenting the similar phrases to a user; and
receiving a user selection of one of the similar phrases, as a substitute for the component phrase of the text input for which no exact match can be found.

10. The method of claim 9, wherein when presenting the similar phrases to the user, the similar phrases are ranked according to their similarity to the component phrase for which no exact match can be found.

11. The method of any preceding claim, wherein at least one of the one or more component phrases comprises multiple words.

12. A computing device for converting text to video, comprising:
at least one processor configured to implement the method of any preceding claim; and
a memory in communication with the at least one processor.

13. A non-transitory computer readable medium encoded with data representing a computer program, that can be used to direct a programmable device to perform the method of any one of claims 1 to 11.
